# EUROPEAN PATENT APPLICATION

(11) **EP 3 090 867 A1**
(43) Date of publication of application: **09.11.2016**
(21) Application number: 15382227.5
(22) Date of filing: 04.05.2015
(51) Int. Cl.: B30B 1/32, B30B 15/28, F16P 1/02

(54) **GUARD FOR A HYDRAULIC PRESS**

(71) Applicant: Melchor Gabilondo, S.A., 48240 Berriz (BIZKAIA) (ES)
(72) Inventor: Gonzalez de Arriba, Saúl, 48240 Berriz (Vizcaya) (ES)
(74) Representative: Carpintero Lopez, Francisco

(57) **Abstract**

The present invention relates to a guard for a hydraulic press which allows forming an easy-to-install protection barrier having a reduced number of components, preventing any possible injury to operators, the guard (1) comprising: a front panel (10) made of a transparent, impact-resistant material; vertical guide profiles (20) into which said front panel (10) is slidable for a relative vertical movement of the front panel (10) with respect to the guide profiles (20); a pair of side panels (30), also made of a transparent material, fixed to the guide profiles (20); fixing means (40) for the front panel (10) which are attached both to the front panel (10) and to one of the guide profiles (20) for fixing the front panel (10) at a desired height; and a pair of anchoring arms (50) attached to the side panels (30) and having fastening means (60) suitably sized for coupling to the workbench (A) of a hydraulic press (P).

## Description

### Object of the Invention

The present invention belongs to the field of hydraulic presses of the type used in mechanical workshops for manipulating metal parts.

The object of the present invention relates to a guard for coupling and specific placement thereof in front of the workbench of a hydraulic press, forming a simple-and easy-to-install protection barrier, which in addition to preventing any injury or accident to operators, resulting from the impact or casting of chips and splinters expelled by force, allows optimal viewing of the pressing process.

### Background of the Invention

Hydraulic presses are well known today, particularly shop hydraulic presses used in different industrial sectors for carrying out metal part manipulating tasks by means of applying press forces or loads. Said manipulating tasks include operations such as bending or straightening parts, inserting or extracting one part with respect to another, attaching or separating parts, etc.

A hydraulic press basically consists of a closed hydraulic circuit in which a hydraulic fluid, generally an oil, is moved through the different components of the hydraulic circuit. Energy generating equipment such as a hydraulic pump thereby applies pressure on the hydraulic fluid. This energy contained in the fluid is delivered to a hydraulic cylinder which has an inner piston which finally applies the necessary force on the part to be manipulated, this press force being of a great magnitude (there are presses ranging from a few tons, 4 or 5 t, to more than 100 and 200 tons of applied force).

More particularly, hydraulic presses have a workbench provided with support seats on which the part to be manipulated is placed and fixed. Before placing and fixing the part, the workbench of the hydraulic press is positioned at a suitable working height. At this point, International Patent Application PCT WO2014/188038 A1 belonging to the same owner as the present invention must be pointed out, which describes a hydraulic press aimed at facilitating the work of operators, making the handling thereof simpler and easier, such that the conventional "winching" mechanisms for adjusting the height of the workbench, which are a slow and cumbersome mechanism, are avoided.

Notwithstanding the foregoing, several drawbacks are still being detected in current hydraulic presses including, among others:
- Due to the high working forces used when working on such hydraulic presses, incidental injuries and accidents occur frequently as a result of the impetuous casting of small splinters or chips of material which come from the part that is being manipulated and hit the operator's body like projectiles.
- The only safety means commonly used today when handling these machines are the use of protective glasses, as well as safety footwear, which are completely insufficient and ineffective in many cases.
- Another problem existing in current hydraulic presses is the large number of parts and components required for their assembly and mounting (levers, swiveling arms, screwing-in means, etc.) having a significant structural complexity, and as a result, substantially increasing installation costs.
- Furthermore, the preceding point directly results in the presses being more susceptible to breakdowns, failures and clearances between the parts thereof, again entailing increased economic costs for repairing, replacing and/or maintaining the parts.

### Description of the Invention

The present invention solves the previously mentioned drawbacks by providing a guard for a hydraulic press which, in addition to forming an efficient and safe protection barrier against possible impacts of chips and/or splinters expelled by force from the part to be manipulated, allows manually installing same in a quick and easy manner on the hydraulic press itself without the intervention of levers or screwing-in means for that purpose, entailing a reduced number of components while at the same time favoring optimal viewing and tracking of the pressing process at all times.

The guard object of the invention, having specific application on the workbench of a hydraulic press, comprises a front panel made of a transparent, impact-resistant material; vertical guide profiles into which said front panel is slidable for a relative vertical movement of the front panel with respect to the guide profiles; a pair of side panels, also made of a transparent material, fixed to the guide profiles; fixing means for the front panel attached both to the front panel and to one of the guide profiles for fixing the front panel at a desired height; and a pair of anchoring arms attached to the side panels and having fastening means suitably sized for coupling to the workbench of a hydraulic press.

The guard herein described thereby constitutes an additional safety element which, due to it being portable and independent with respect to the press, without screwing-in means or any other system for permanent fixing to the press, allows a simple and quick mounting and dismounting, being installable by a single operator only by manually coupling the fastening means of the anchoring arms to the profiles of the workbench of the hydraulic press, the guard being firmly secured in the working position.

As regards the fixing means of the front panel, it must be pointed out that they are manually operated by the user him/herself, said fixing means acting only on the front panel, such that a vertical relative movement of the front panel with respect to the guide profiles is produced. Therefore, the user is provided with the possibility of adjusting and fixing the height of the front panel quickly, easily and directly, regardless of his/her height, the operator being protected at all times.

Furthermore, it has preferably been envisaged that the front panel can have a notch made on its surface, said notch being suitably sized for allowing the operator to partially insert at least one finger, such that the sliding movement of the front panel in the vertical direction is thereby facilitated. More preferably, said notch has an inverted U shape or a half-capsule longitudinal section and is located in the center of the lower edge of the front panel, favoring the user to reach and access said notch from all positions, both in the position of maximum height, where the front panel is moved completely upwards; and in the initial or resting position, where the front panel is located in a position of lower height.

A regards the coupling of the guard to the workbench of the press, it must be pointed out that the fastening means of the anchoring arms preferably comprise a pair of recesses made on each of the anchoring arms, said recesses having an inverted U shape, with a width equal to the width of the profile of the workbench of the hydraulic press. This allows perfect coupling and fastening of the guard to the workbench, such that there are no clearances or movements that may cause unwanted wear or misalignment over time.

As regards the front panel and side panels, it has been envisaged that they can be made of any material which, in addition to providing suitable transparency that allows full tracking and viewing of the pressing process of the machine, has resistance and strength characteristics against possible impacts of splinters or chips of material from the metal part which is being manipulated at any time. Such materials can be, for example, high impact-resistant glass, methacrylate, etc.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a front perspective view of the guard for a hydraulic press object of the invention.
Figure 2 shows a rear perspective view of the guard, in which the grips, the through grooves for the insertion of the user's hands, and the die-cut holes of the anchoring arms, are shown.
Figure 3 shows a perspective view of a hydraulic press incorporating the guard of the invention.
Figure 4 shows a side view of the hydraulic press of Figure 3, in which the coupling of the anchoring arms to the profile of the workbench of the press is shown.
Figure 5 shows a detailed view of the upper portion of the hydraulic press, in which the notch made on the lower edge of the front panel is shown.

### Preferred Embodiment of the Invention

A preferred embodiment is described below in reference to the aforementioned drawings, without it limiting or reducing the scope of protection of the present invention.

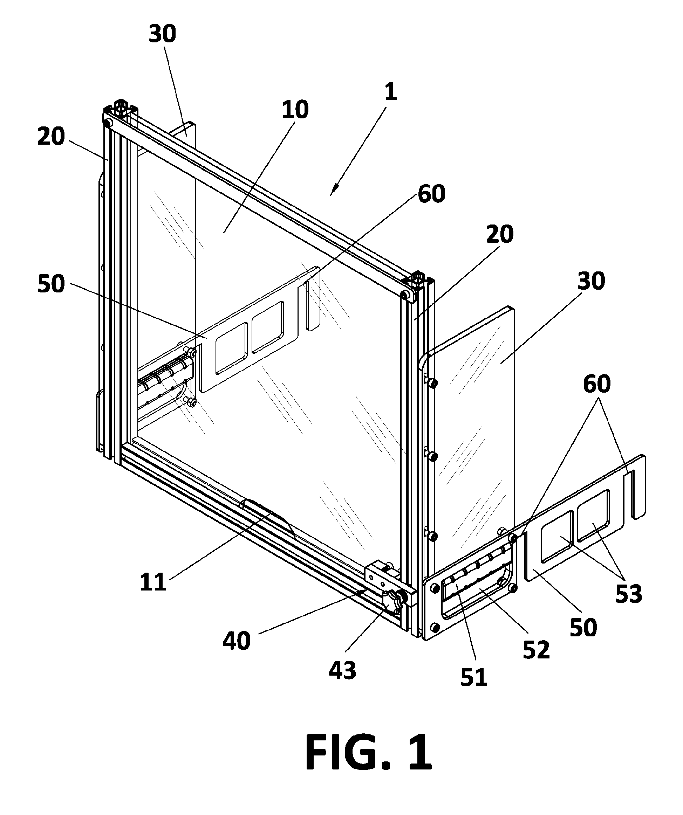

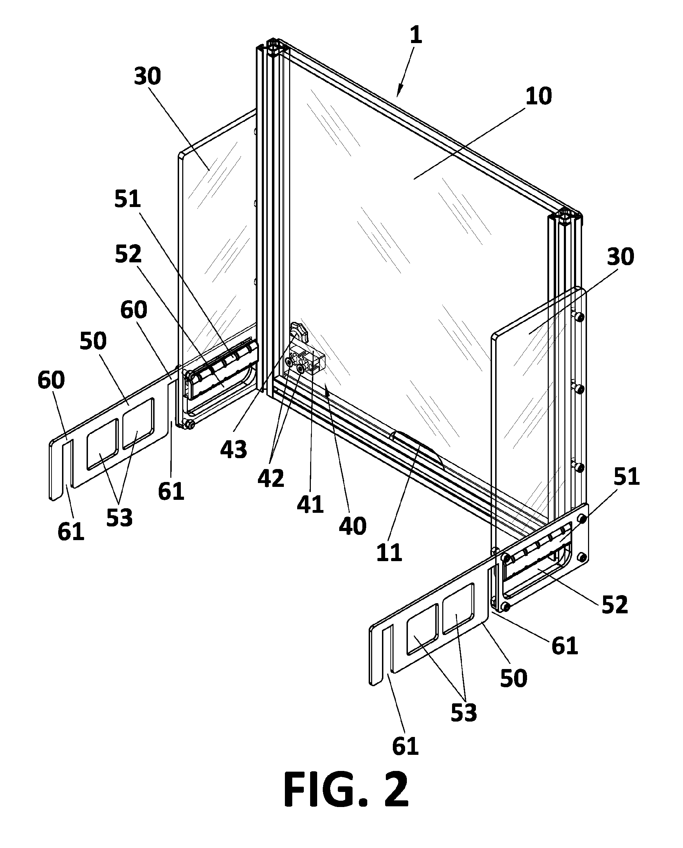

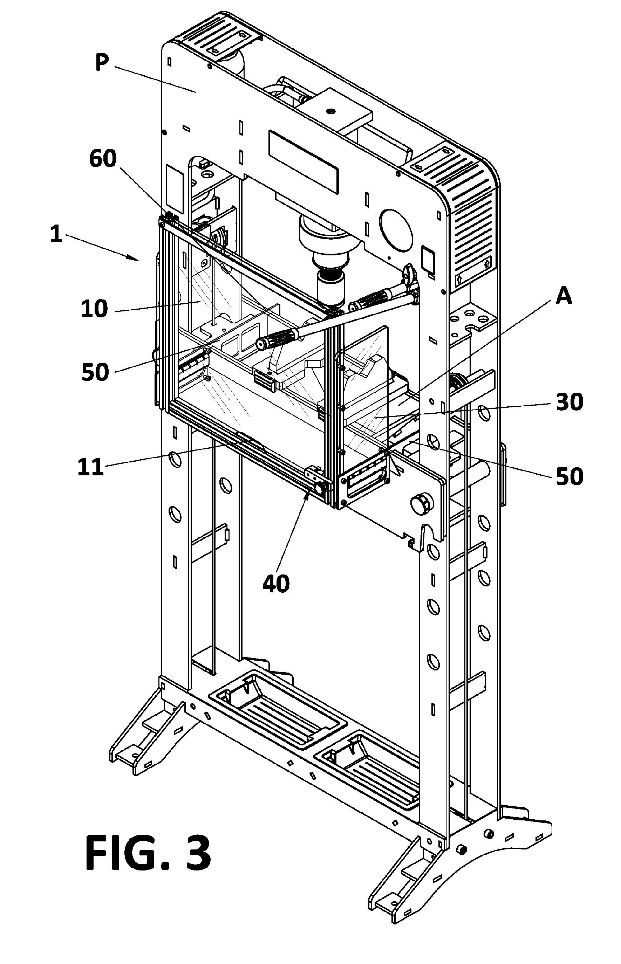

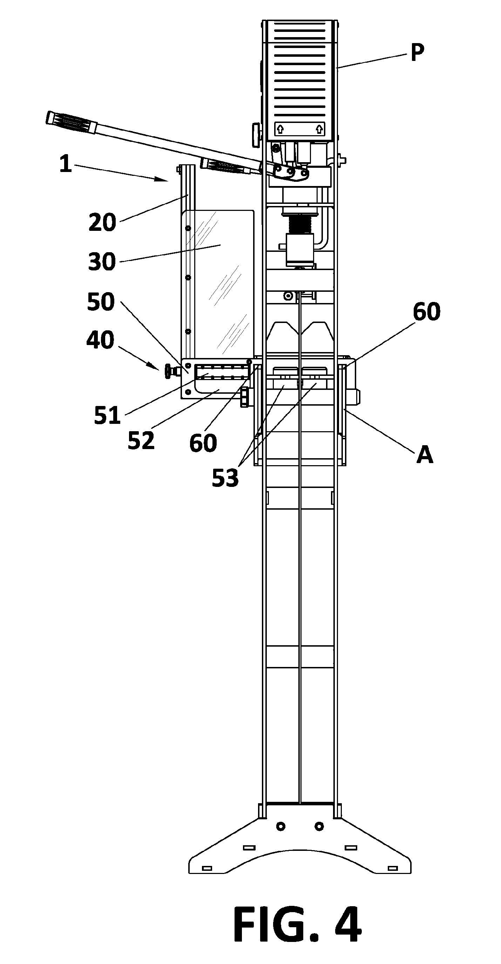

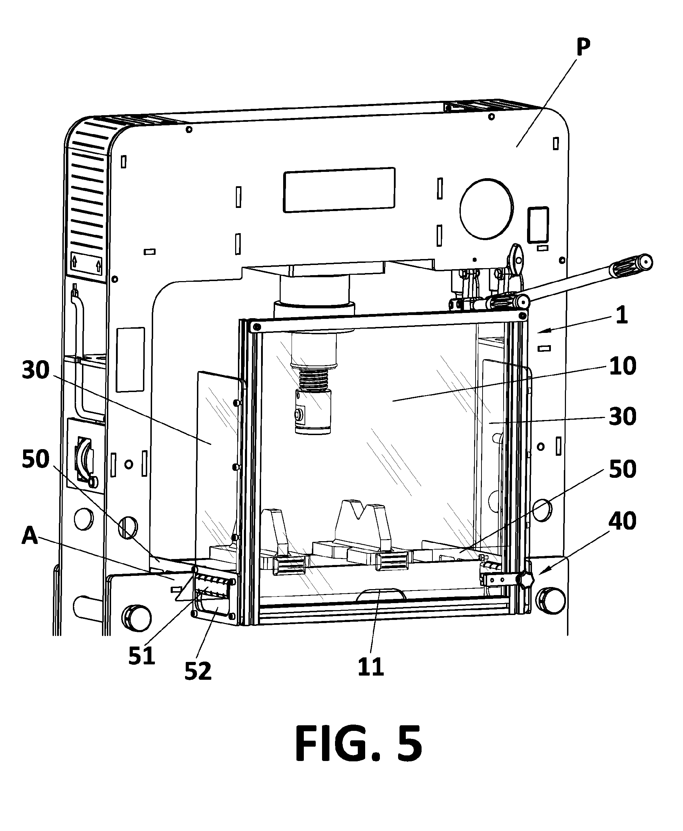

Figures 1 and 2 show a preferred embodiment of the guard (1) for a hydraulic press (P) of the invention, which is to be applied on and/or coupled to the workbench (A) of a hydraulic press (P), said guard (1) comprising:
- a front panel (10) made of a transparent, impact-resistant material, such as methacrylate, which in this example furthermore has an inverted U-shaped notch (11) located in the central portion of the lower edge thereof to facilitate and accompany the sliding movement of said front panel (10), as observed in Figure 5;
- vertical guide profiles (20) into which said front panel (10) is slidable for a relative vertical movement of the front panel (10) with respect to the guide profiles (20),
- a pair of side panels (30), also made of a transparent material, and which in the present example are fixed to the guide profiles (20) perpendicularly at a 90° angle between the front panel (10) and said side panels (30), as shown in Figures 1, 2 and 3;
- fixing means (40) for the front panel (10), shown in Figures 1 and 2, which allow the operator to secure and/or fix the front panel (10) at the desired height, said fixing means (40) comprising in the present example a supporting part (41) to which there is fixed at least one suction cup (42), there being two suction cups (42) in the present embodiment, in turn adhered to the front panel (10), and where said supporting part (41) is in turn fixed to one of the guide profiles (20) through an operating knob (43); and
- a pair of anchoring arms (50), shown in Figures 1 and 2, attached to the side panels (30) and having fastening means (60) suitably sized for coupling to the workbench (A) of the hydraulic press (P), as shown in Figures 3, 4 and 5.

Therefore, if a user wants to adjust the height of the front panel (10), he/she will only need to manually act on the operating knob (43) and fix it at the desired height, said operating knob (43) being able to have to that end a clip-type closure with respect to the guide profile (20) itself, or a clamp screw closure with said guide profile (20).

As regards the fixing means (40), as shown in Figures 1-3 and 5, they are preferably located on the outer surface of the front panel (10), in a lower side thereof, next to one of the guide profiles (20). This makes them more accessible and easier to handle from all the possible positions of the front panel (10), both in the completely raised or lifted position thereof and in the initial or resting position.

On the other hand, Figure 2 shows that the fastening means (60) comprise according to the present embodiment a pair of recesses (61) made on each of the anchoring arms (50), said recesses (61) having an inverted U shape with a width equal to the width of the profile of the workbench (A) of the hydraulic press (P). This favors optimal anchoring and secure fixing between the guard (1) and the workbench (A), without clearances or misalignment in the contact areas thereof, such that the stability of the guard (1) is assured at all times.

Furthermore, as can be seen in Figures 1, 2 and 4, each of the anchoring arms (50) comprises a grip (51) and a through groove (52) having a size sufficient for the insertion of the operator's hands, which grip (51) and groove (52) are coplanar to the side panels (30) in the present example and located horizontally and in a lower position with respect to said side panels (30). This particular arrangement of the grips (51) and through grooves (52) allows obtaining two significant advantages:
a) on one hand, it allows a single operator to mount or dismount the guard (1) of the invention on or from the workbench (A) of a hydraulic press (P) by him/herself in a simple and easy manner without the help of others, auxiliary tools or equipment;
b) On the other hand, the fact that said grips (51) and through grooves (52) are coplanar to the side panels (30) allows favoring suitable ergonomics and easy access of the operator's hands towards the workbench (A) of the hydraulic press (P), while the fact that they are located in a lower position with respect to the side panels (30) allows the user to better control the guard (1) when moving same, since the user has greater sense of security given that the center of gravity of the guard (1) is located in a position of lower height.

On the other hand, in order to reduce the weight of the guard (1) and to make the task of mounting and dismounting same simpler and easier, it has been envisaged that the anchoring arms (50) have die-cut holes (53), shown in Figures 1 and 2, made on their surface, there being two die-cut holes (53) in each of the anchoring arms (50) in the present embodiment.

Notwithstanding the foregoing, although a perpendicular arrangement between front panel (10) and side panels (30) has been shown in the present example, according to another preferred embodiment, that is not depicted, it has been envisaged that said side panels (30) can be fixed to the guide profiles (20) obliquely or in a chamfered manner, i.e., forming an obtuse angle between the front panel (10) and each of the side panels (30). The plan view of the guard (1) would therefore be in a U shape where the side panels (30) would have the shape of oblique chamfers between the front panel (10) and the anchoring arms (50). This would allow providing the operator with greater field of vision of the working area of the press, from different angles close to one another, without having to move too much, as could happen with the side panels (30) arranged perpendicularly to the front panel (10).

Finally, it must be pointed out that although Figures 3, 4 and 5 show the application of the guard (1) of the invention in a manual hydraulic press (P) operated through an upper lever, which is already known on the other hand, it has been envisaged that the guard (1) herein described, as a result of its simple but effective system for fastening or anchoring to the workbench (A), is also applicable to hydraulic presses (P) that are automatic and of different models or from different manufacturers, thereby significantly broadening the applicability thereof.

## Claims

1. Guard (1) for a hydraulic press (P), comprising:
- a front panel (10) made of a transparent, impact-resistant material,
- vertical guide profiles (20) into which said front panel (10) is slidable for a relative vertical movement of the front panel (10) with respect to the guide profiles (20),
- a pair of side panels (30), also made of a transparent material, fixed to the guide profiles (20),
- fixing means (40) for the front panel (10) attached both to the front panel (10) and to one of the guide profiles (20) for fixing the front panel (10) at a desired height, and
- a pair of anchoring arms (50) attached to the side panels (30) and having fastening means (60) suitably sized for coupling to the workbench (A) of a hydraulic press (P).

2. Guard (1) for a hydraulic press according to claim 1, **characterized in that** the front panel (10) has a notch (11) on its surface to facilitate the sliding movement of said front panel (10).

3. Guard (1) for a hydraulic press according to claim 2, **characterized in that** the notch (11) has an inverted U shape and is located in the center of the lower edge of the front panel (10).

4. Guard (1) for a hydraulic press according to claim 1, **characterized in that** the fixing means (40) are located on the outer surface of the front panel (10), in a lower side thereof, next to one of the guide profiles (20).

5. Guard (1) for a hydraulic press according to any one of claims 1 or 4, **characterized in that** the fixing means (40) comprise a supporting part (41) to which there is fixed at least one suction cup (42) in turn adhered to the front panel (10), and where said supporting part (41) is fixed to one of the guide profiles (20) through an operating knob (43).

6. Guard (1) for a hydraulic press according to claim 1, **characterized in that** each of the anchoring arms (50) comprises a grip (51) and a through groove (52) having a size sufficient for the insertion of the operator's hands.

7. Guard (1) for a hydraulic press according to claim 6, **characterized in that** the grips (51) and through grooves (52) are coplanar to the side panels (30) and located horizontally and in a lower position with respect to said side panels (30).

8. Guard (1) for a hydraulic press according to claim 1, **characterized in that** the anchoring arms (50) have die-cut holes (53) made on their surface.

9. Guard (1) for a hydraulic press according to claim 1, **characterized in that** the fastening means (60) comprise a pair of recesses (61) made on each of the anchoring arms (50), having an inverted U shape, where said recesses (61) have a width equal to the width of the profile of the workbench (A) of the hydraulic press (P).

10. Guard (1) for a hydraulic press according to any one of the preceding claims, **characterized in that** the side panels (30) are fixed to the guide profiles (20) perpendicularly, forming a 90° angle between the front panel (10) and said side panels (30).

11. Guard (1) for a hydraulic press according to any one of claims 1 to 9, **characterized in that** the side panels (30) are fixed to the guide profiles (20) obliquely, at an obtuse angle between the front panel (10) and each of the side panels (30).

12. Guard (1) for a hydraulic press according to claim 1, **characterized in that** both the front panel (10) and the side panels (30) are made of impact-resistant glass.

13. Guard (1) for a hydraulic press according to claim 1, **characterized in that** both the front panel (10) and the side panels (30) are made of methacrylate.
